# EUROPEAN PATENT APPLICATION

(11) **EP 1 489 838 A2**
(43) Date of publication of application: **22.12.2004**
(21) Application number: 04013964.4
(22) Date of filing: 15.06.2004
(51) Int. Cl.: H04N 5/44

(54) **Digital television broadcasting receiver**

(30) Priority: 17.06.2003 JP 2003171757
(71) Applicant: SANYO ELECTRIC CO., LTD., Moriguchi-shi, Osaka (JP)
(72) Inventor: Nakashima, Fuyuki, Ibi-gun Gifu 503-2425 (JP); Ieda, Kazuhiro, Hirakata-City Osaka 573-1113 (JP)
(74) Representative: Glawe, Delfs, Moll & Partner

(57) **Abstract**

In a digital television broadcasting receiver comprising video decoding means for decoding received video data, audio decoding means for decoding received audio data, means for generating receiving-side time information which is synchronized with program clock reference information on the basis of the program clock reference information, means for outputting the audio data when present time stamp information included in the audio data and the receiving-side time information coincide with each other, and means for outputting the video data when present time stamp information included in the video data and the receiving-side time information coincide with each other, there is provided means for immediately outputting, when channels are switched, video data received first after switching the channels irrespective of present time stamp information included in the video data.

## Description

### BACKGROUND OF THE INVENTION

### Field of the Invention

The present invention relates to a digital television broadcasting receiver.

### Description of the Background Art

In digital television broadcasting, it has been known that audio data and video data are asynchronously fed. In a digital television broadcasting receiver, a video and an audio are synchronized by a present time stamp (PTS) in a packet. In a case where channels are changed, even if video data is received earlier than audio data, the output of the video is stopped until the time represented by the present time stamp corresponding to the received video data in order to synchronize the video and the audio. When the channels are changed, therefore, it takes long until the video is outputted.

### SUMMARY OF THE INVENTION

An object of the present invention is to provide a digital television broadcasting receiver capable of shortening, when channels are changed, a time period elapsed until a video is outputted.

In a digital television broadcasting receiver comprising means for receiving video data including present time stamp information, audio data including present time stamp information, and data including program clock reference information, video decoding means for decoding the received video data, audio decoding means for decoding the received audio data, means for generating receiving-side time information which is synchronized with the program clock reference information on the basis of the program clock reference information, means for outputting the audio data when the present time stamp information included in the audio data and the receiving-side time information coincide with each other, and means for outputting the video data when the present time stamp information included in the video data and the receiving-side time information coincide with each other, a first digital television broadcasting receiver according to the present invention is characterized by comprising means for immediately outputting, when channels are switched, video data received first after switching the channels irrespective of present time stamp information included in the video data.

In a digital television broadcasting receiver comprising a circuit for receiving video data including present time stamp information, audio data including present time stamp information, and data including program clock reference information, a video decoding circuit for decoding the received video data, an audio decoding circuit for decoding the received audio data, a circuit for generating receiving-side time information which is synchronized with the program clock reference information on the basis of the program clock reference information, a circuit for outputting the audio data when the present time stamp information included in the audio data and the receiving-side time information coincide with each other, and a circuit for outputting the video data when the present time stamp information included in the video data and the receiving-side time information coincide with each other, a second digital television broadcasting receiver according to the present invention is characterized by comprising a circuit for immediately outputting, when channels are switched, video data received.first after switching the channels irrespective of present time stamp information included in the video data.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the configuration of a digital television broadcasting receiver; and
Fig. 2 is a flow chart showing the procedure for output control processing for video data in a case where channels are switched.

### DESCRIPTION OF THE PREFERRED EMBODIMENTS

Referring now to the drawings, description is made of an embodiment of the present invention.

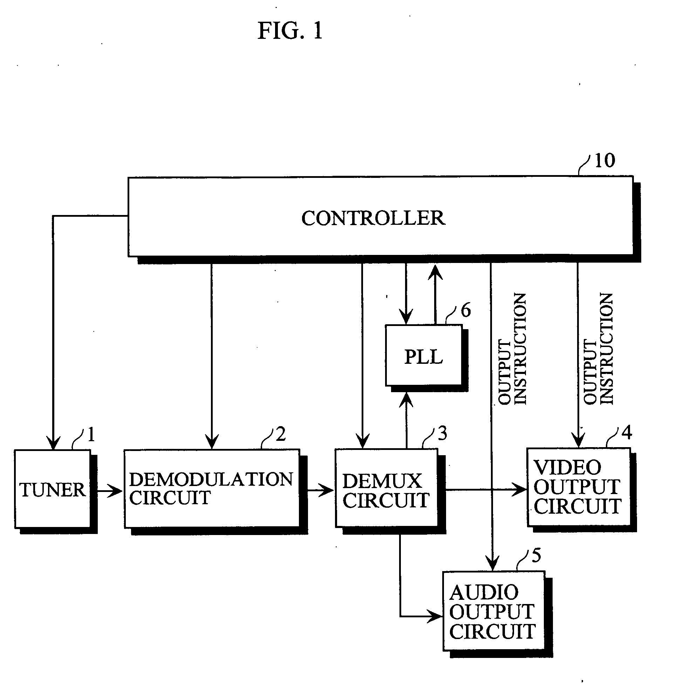

Fig. 1 illustrates the configuration of a digital television broadcasting receiver.

Digital television broadcasting waves are sent to a demodulation circuit 2 through an antenna (not shown) and a tuner 1, and are demodulated. An output of the demodulation circuit 2 is fed to a Demux (Demultiplexer) circuit 3.

The Demux circuit 3 decodes a packet, to extract from the packet PCR (Program Clock Reference) information, video data and PTS (Present Time Stamp)-V information included therein, audio data and PTS (Present Time Stamp) -A information included therein, etc.

The video data is stored in a buffer in a video output circuit 4. The audio data is stored in a buffer in an audio output circuit 5. The PCR information is fed to a PLL (Phase-Locked Loop) 6. A controller 10 monitors the PLL 6, to generated receiving-side time information which is synchronized with the PCR information.

The PTS-V Information included in the video data fed to the video output circuit 4 and the PTS-A information included in the audio data fed to the audio output circuit 5 are fed to the controller 10.

The controller 10 sends, when the PTS-A information included in the audio data fed to the audio output circuit 5 coincides with the receiving-side time information, an instruction to output the audio data having the PTS-A information (an output instruction) to the audio output circuit 5. The audio output circuit 5 outputs, when it receives the output instruction, the audio data having the PTS-A information stored in the buffer. That is, output control processing for the audio data is as is conventionally performed.

In principle, the controller 10 sends, when the receiving-side time information coincides with the PTS-V information included in the video data fed to the video output circuit 4, an instruction to output the video data having the PTS-V information (an output instruction) to the video output circuit 4. The video output circuit 4 outputs, when it receives the output instruction, the video data having the PTS-V information stored in the buffer.

When channels are switched, however, the controller 10 immediately outputs video data fed to the video output circuit 4 first after switching the channels irrespective of PTS-V information included in the video data. In this respect, output control processing for the video data differs from that conventionally performed.

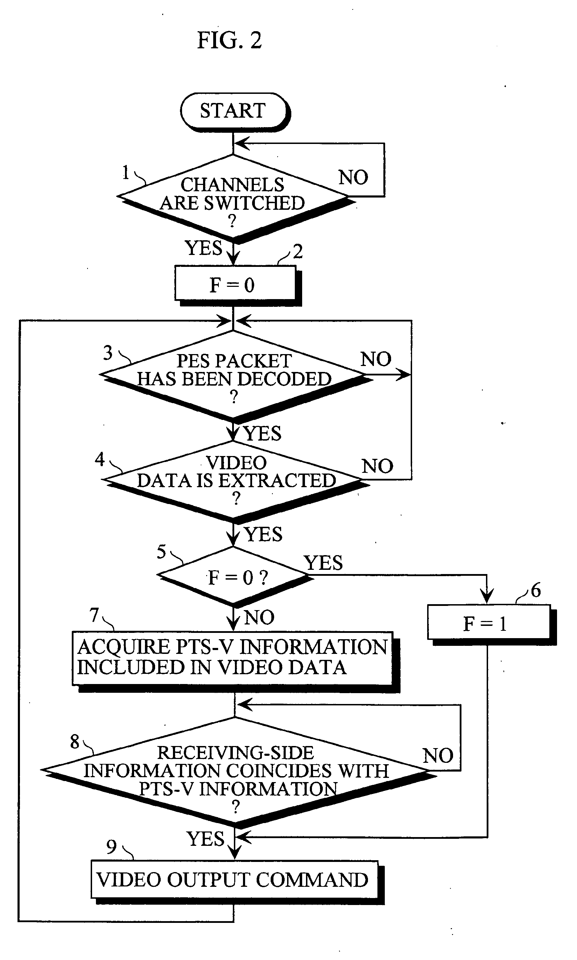

Fig. 2 shows the procedure for output control processing for video data in a case where channels are switched.

When channels are switched (step 1), an initial output flag F is reset (F = 0) (step 2).

It is then judged whether or not one PES packet has been decoded by the Demux circuit 3 (step 3).

It is then judged whether or not video data is extracted by the decoding (video data is included in the PES packet) (step 4). When no video data is extracted by the decoding, the procedure is returned to the step 3. When video data is extracted by the decoding, it is judged whether or not the initial output flag F is reset (F = 0) or set (F = 1) (step 5).

When the initial output flag F is reset (F = 0), it is judged that the video data extracted by the decoding is video data first received after switching the channels, to set the initial output flag F (step 6), and output to the video output circuit 4 a video output command for immediately outputting the video data (step 9). The procedure is returned to the step 3.

When the initial output flag F is set (F = 1), it is judged that the video data extracted by the decoding is video data received second and later after switching the channels, to acquire PTS-V information included in the video data (step 7). When receiving-side time information coincides with the acquired PTS-V information (step 8), the video output command for outputting the video data is outputted to the video output circuit 4 (step 9). The procedure is returned to the step 3.

Although the present invention has been described and illustrated in detail, it is clearly understood that the same is by way of illustration and example only and is not to be taken by way of limitation, the spirit and scope of the present invention being limited only by the terms of the appended claims.

## Claims

1. In a digital television broadcasting receiver comprising means for receiving video data including present time stamp information, audio data including present time stamp information, and data including program clock reference information, video decoding means for decoding the received video data, audio decoding means for decoding the received audio data, means for generating receiving-side time information which is synchronized with the program clock reference information on the basis of the program clock reference information, means for outputting the audio data when the present time stamp information included in the audio data and the receiving-side time information coincide with each other, and means for outputting the video data when the present time stamp information included in the video data and the receiving-side time information coincide with each other,
a digital television broadcasting receiver comprising
means for immediately outputting, when channels are switched, video data received first after switching the channels irrespective of present time stamp information included in the video data.

2. In a digital television broadcasting receiver comprising a circuit for receiving video data including present time stamp information, audio data including present time stamp information, and data including program clock reference information, a video decoding circuit for decoding the received video data, ah audio decoding circuit for decoding the received audio data, a circuit for generating receiving-side time information which is synchronized with the program clock reference information on the basis of the program clock reference information, a circuit for outputting the audio data when the present time stamp information included in the audio data and the receiving-side time information coincide with each other, and a circuit for outputting the video data when the present time stamp information included in the video data and the receiving-side time information coincide with each other,
a digital television broadcasting receiver comprising
a circuit for immediately outputting, when channels are switched, video data received first after switching the channels irrespective of present time stamp information included in the video data.
